# FASCICULE DE BREVET EUROPEEN

(11) **EP 1 462 615 B1**
(45) Date de publication et mention de la délivrance du brevet: **22.10.2014**
(21) Numéro de dépôt: 04290659.4
(22) Date de dépôt: 11.03.2004
(51) Int. Cl.: F01D 5/08, F01D 5/14, F01D 9/06, F01D 17/16, F01D 9/02

(54) **Dispositif d'injection d'air de refroidissement dans un rotor de turbine**
Vorrichtung zum Einblasen von Kühlluft in einen Turbinenrotor
Device for injecting cooling air into a turbine rotor

(30) Priorité: 25.03.2003 FR 0303600
(43) Date de publication de la demande: 29.09.2004
(73) Titulaire: SNECMA, 75015 Paris (FR)
(72) Inventeur: Mortgat, Didier, 77380 Combs-la-Ville (FR)
(74) Mandataire: David, Alain

(56) Documents cités:
- DE-C- 961 742
- GB-A- 2 019 793
- GB-A- 2 372 296
- US-A- 3 038 698
- US-A- 3 042 371
- US-A- 4 619 580
- US-A- 5 207 558

## Description

### Domaine de l'invention

La présente invention se rapporte de façon générale aux systèmes d'injection d'air de refroidissement dans les turbomachines d'avion et elle concerne plus particulièrement l'optimisation de l'alimentation en air de refroidissement d'un rotor de turbine.

### Art antérieur

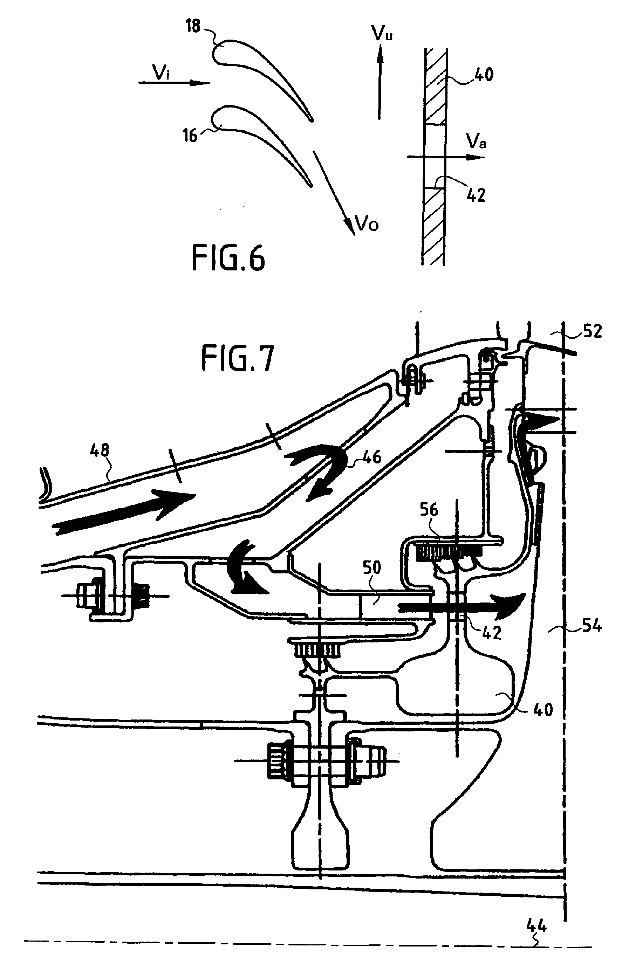

Un système conventionnel d'injection d'air de refroidissement dans un rotor de turbine d'une turbomachine d'avion est illustré de façon schématique à la figure 7. Le rotor 40 comporte des orifices de passage 42 régulièrement répartis autour d'un axe longitudinal 44 de la turbomachine et au travers duquel l'air de refroidissement, en provenance d'un flux d'air de refroidissement 46 prélevé par exemple autour de la chambre de combustion 48, est injecté à partir d'injecteurs fixes 50 répartis circonférentiellement autour de l'axe longitudinal, le rayon moyen des injecteurs correspondant au rayon moyen des orifices de passage du rotor qui sont donc en vis à vis. Le débit d'injection qui va refroidir les aubes de turbines 52 mais aussi le disque rotor 54 et le labyrinthe 56 assure également une purge en amont de ces aubes et il est calibré par la section au col aérodynamique des injecteurs qui reste constante dans tous les phases de vol, son dimensionnement étant déterminé en fonction des conditions de fonctionnement de la turbomachine les plus sévères, en principe lors d'un décollage avec un moteur dégradé.

Ainsi, ce débit d'injection n'est aucunement optimisé par exemple pendant les phases de vol de croisière et il existe donc des pertes aérodynamiques importantes liées à la réintroduction d'air de refroidissement en excès aussi bien au niveau des aubes de la turbine que de la purge amont.

Il est connu de remédier à ce problème en introduisant en amont des injecteurs un dispositif de régulation du débit, comme le montre la demande FR 2 500 534, ou bien de réaliser ces injecteurs en plusieurs parties dont l'une peut être pilotée par un clapet actionné par la pression de l'air, comme l'enseigne la demande GB 2 246 836.

Malheureusement, ces solutions n'apparaissent pas satisfaisantes car en ajoutant de la masse au moteur (tuyauterie, clapet, etc.) elles limitent les performances de la turbomachine, en complexifiant son équipement (régulation) elles en limitent la fiabilité, et en lui ajoutant des composants elles en augmentent le coût.

En outre, ces solutions ne permettent pas de conserver une aérodynamique optimisée pour toutes les phases de vol, et notamment la phase principale de croisière.

Une autre solution est divulguée dans le document US-A-5207558.

### Objet et définition de l'invention

Aussi, la présente invention a pour objet un dispositif d'injection d'air de refroidissement dans un rotor de turbine de turbomachine qui soit performant, fiable et peu coûteux par rapport aux dispositifs de l'art antérieur et notamment qui présente une masse et un coût diminués comparés à ces dispositifs. Un but de l'invention est aussi de conserver une aérodynamique optimisée même hors d'un débit maximal et de donc minimiser les pertes de rendement de la turbine, notamment en phase de vol de croisière.

Ces buts sont atteints par un dispositif d'injection d'air de refroidissement comme défini dans la revendication 1.

Ainsi, cette configuration simple à réaliser et à installer ne rajoute pas de masse au moteur et présente un fonctionnement particulièrement fiable puisque entièrement passif.

De préférence, lesdits premier et second matériaux métalliques sont assemblés par soudage ou brasage.

Avantageusement, ledit premier matériau métallique est choisi parmi les alliages à base Nickel et ledit second matériau métallique est choisi parmi les alliages à base Nickel ou Titane.

Selon un mode de réalisation alternatif, chaque injecteur peut comporter une structure métallique à mémoire de forme.

Chaque injecteur est fixé aux viroles interne et externe par une liaison boulonnée de façon à assurer un angle de calage précis et chaque injecteur présente, sur une longueur déterminée du coté de son bord de fuite, une réduction de hauteur pour assurer une libre dilatation du col aérodynamique.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en perspective partielle d'un dispositif d'injection d'air de refroidissement selon la présente invention,
- la figure 2 montre une structure d'injecteur bimétallique spécialement adapté au dispositif de figure 1,
- la figure 3 illustre la dilatation du col aérodynamique des injecteurs du dispositif de la figure 1,
- les figures 4A à 4C montrent trois sections de la figure 3 pour différentes positions du col aérodynamique des injecteurs,
- la figure 5 est une coupe d'un injecteur,
- la figure 6 est un diagramme illustrant l'écoulement de l'air de refroidissement au travers des orifices de passage du rotor de turbine, et
- la figure 7 est une vue schématique partielle d'une turbomachine montrant un dispositif d'injection d'air de refroidissement d'un rotor de turbine de l'art antérieur.

### Description détaillée d'un mode de réalisation préférentiel

Il est connu que la vitesse de vol d'un avion influe sur la température de l'air traversant la turbomachine. Notamment, l'écart de température entre la phase de décollage et la phase de croisière est typiquement de 100 à 200K (degré Kelvin) au niveau des injecteurs alimentant les aubes mobiles. Les inventeurs ont mis à profit cette caractéristique en proposant des injecteurs dont le profil aérodynamique varie avec la température permettant ainsi de surventiler le rotor de turbine au décollage, de le ventiler juste le nécessaire en croisière et de ne le ventiler que le strict minium au ralenti.

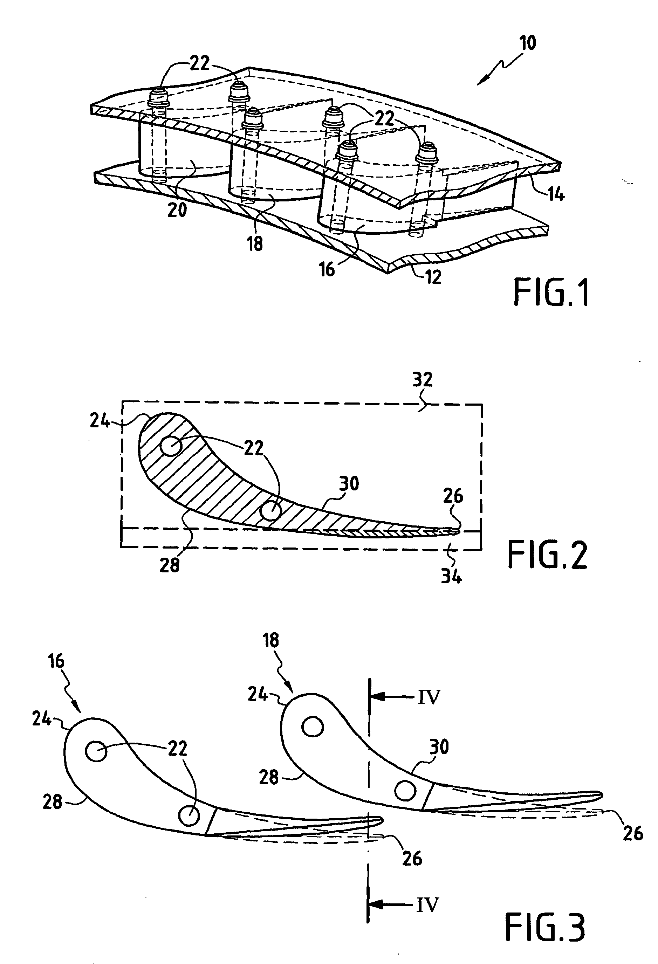

Un dispositif conforme à l'invention d'injection d'air de refroidissement dans le rotor d'une turbine d'une turbomachine est illustré de façon schématique en perspective partielle à la figure 1.

Ce dispositif 10 comporte entre une virole interne 12 et une virole externe 14 une pluralité d'injecteurs 16, 18, 20 répartis régulièrement autour d'un axe longitudinal de la turbomachine et calés chacun dans une même position déterminée correspondant à un angle de calage précis par des moyens de fixation, par exemple deux liaisons boulonnées 22.

Chaque injecteur présente un profil aérodynamique pour assurer un bon guidage de l'air de refroidissement avec un arrondi amont appelé bord d'attaque 24 permettant de tolérer des variations d'incidence dans l'écoulement, une partie aval amincie appelée bord de fuite 26 pour diminuer les sillages et reliant ces deux bords une paroi extrados 28 et une paroi intrados 30.

Selon l'invention, chaque injecteur présente une structure de matériau permettant une variation de la section au col aérodynamique en fonction de la température. Selon le mode de réalisation envisagé, les injecteurs peuvent être constitués d'un matériau à mémoire de forme ou plus simplement de plusieurs matériaux, avantageusement deux, ayant des coefficients de dilatation thermique différents.

La figure 2 illustre une structure d'injecteur de type bilame comportant deux matériaux métalliques différents. Le premier 32 qui forme la plus grande partie de la structure de l'injecteur est choisi parmi les alliages à base Nickel, par exemple du NC22FeD présentant un premier coefficient de dilatation thermique de 15,5.10⁻⁶ °C⁻¹ et le second 34 qui n'est présent que sur la partie complémentaire de cette structure au niveau de la paroi extrados 28 aboutissant au bord de fuite 26 est choisi parmi les alliages à base Titane ou à base Nickel avec un coefficient de dilatation thermique plus faible que le premier, par exemple du Ti présentant un second coefficient de dilatation thermique de 11.10⁻⁶ °C⁻¹. Le premier matériau comporte deux perçages pour recevoir les liaisons boulonnées 22. La réalisation de la structure précitée peut être obtenue classiquement par électroérosion (découpe au fil), par découpe laser ou encore par découpe au jet d'eau, d'un pavé de ces deux matériaux préalablement assemblés par soudage-diffusion, soudage-friction ou brasage, selon le type de matériau utilisé.

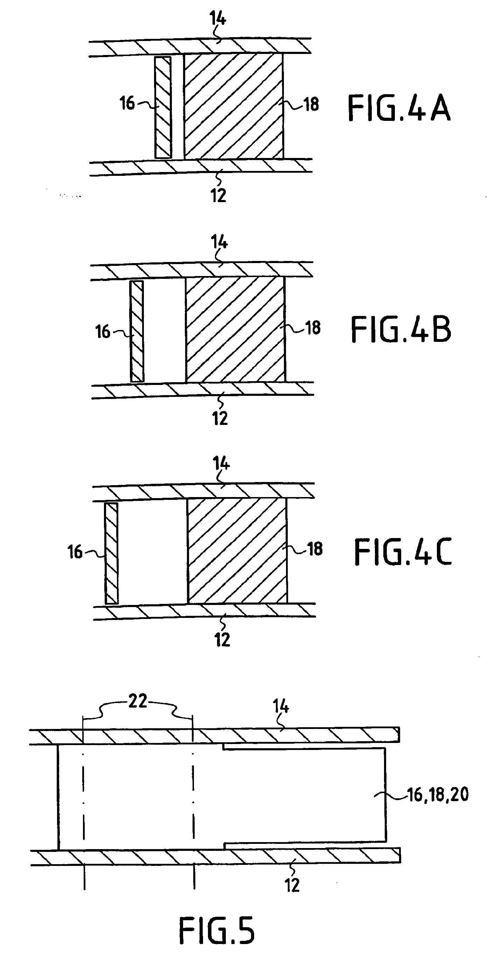

Le fonctionnement du dispositif d'injection est maintenant décrit en regard des figures 3 à 5. La figure 3 montre l'effet de la température sur deux injecteurs (par exemple 16 et 18) pour deux températures différentes, la représentation en pointillés illustrant une position des injecteurs pour une température élevée, par exemple dans une position correspondant à une phase de décollage ou de montée vers une altitude de croisière. On peut noter que, dans cette position, la section au col aérodynamique des injecteurs est plus forte que celle relative à la représentation en traits forts correspondant à une température plus faible, par exemple la température de repos des injecteurs (température à froid). Les figures 4A à 4C illustrent trois positions caractéristiques de cette section au col aérodynamique. La première (Fig 4A) correspond à la section la plus faible relative à un fonctionnement au repos (voire au ralenti) de la turbomachine. La deuxième (Fig 4B) correspond à une section plus grande, par exemple relative à une phase de vol de croisière et la troisième (Fig 4C) correspond à une section de col maximale, par exemple en phase de décollage.

Un choix judicieux des deux matériaux et du profil aérodynamique des injecteurs permet ainsi de régler l'ouverture (la dilatation) du col aérodynamique pour surventiler le rotor de turbine au décollage sans souci de surconsommation (ce qui permet une augmentation de la durée de vie du rotor), de le ventiler au juste nécessaire pendant les phases de croisière pour optimiser cette consommation et de ne le ventiler qu'au strict minimum dans les cas de fonctionnements plus froids, comme en phase de ralenti. Cette adaptation du débit d'air de refroidissement (on peut aussi parler de débit de ventilation) selon les besoins permet un gain de consommation spécifique appréciable, notamment du fait de sa réduction pendant les phases de croisière dont l'influence sur les performances aérodynamiques de la turbomachine est la plus importante.

Bien entendu, pour permettre cette libre dilatation du col aérodynamique, et comme le montre la figure 5, les injecteurs présenteront une réduction de hauteur sur une longueur déterminée (correspondant sensiblement à l'incrustation du second matériau métallique) du coté de leur bord de fuite 26 pour garantir un jeu minimal avec les viroles externe et interne et assurer ainsi une libre dilatation du col aérodynamique.

Ainsi, avec l'invention, la vitesse d'éjection Vo de l'air à la sortie des injecteurs (résultant de la vitesse d'écoulement axiale Vi en entrée de ces injecteurs) reste suffisante pour permettre une traversée optimisée des orifices de passage 42 dans le rotor de turbine 40, c'est à dire compte tenu de la vitesse d'entraînement du rotor Vu avec une vitesse d'alimentation Va toujours dirigée dans la direction axiale initiale (voir la figure 6). L'écoulement d'air initial qui a été dévié par les injecteurs se retrouve ainsi redressé par l'effet de la rotation du rotor.

## Revendications

1. Dispositif (10) d'injection d'air de refroidissement dans un rotor de turbine de turbomachine comportant une pluralité d'injecteurs (16, 18, 20) répartis régulièrement autour d'un axe longitudinal de la turbomachine et montés entre une virole interne (12) et une virole externe (14), chaque injecteur à profil aérodynamique comportant, entre un bord d'attaque (24) et un bord de fuite (26), une paroi extrados (28) et une paroi intrados (30), l'air de refroidissement traversant les injecteurs étant éjecté vers des orifices de passage (42) du rotor de turbine (40) au travers d'une section de passage formant col aérodynamique entre le bord de fuite d'un injecteur et la paroi extrados d'un injecteur immédiatement adjacent, **caractérisé en ce que**, pour modifier la section au col aérodynamique en fonction de la température de l'air de refroidissement traversant les injecteurs, chaque injecteur comporte une structure bimétallique avec un premier matériau métallique (32) formant une plus grande partie de la structure de l'injecteur et ayant un premier coefficient de dilatation thermique et un second matériau métallique (34) formant une partie complémentaire de la structure au niveau de la paroi extrados joignant le bord de fuite de l'injecteur et ayant un second coefficient de dilatation thermique plus faible que le premier, chaque injecteur présentant une réduction de hauteur sur une longueur déterminée correspondant sensiblement à cette partie complémentaire de la structure pour assurer une libre dilatation du col aérodynamique.

2. Dispositif d'injection d'air de refroidissement selon la revendication 1, **caractérisé en ce que** lesdits premier et second matériaux métalliques sont assemblés par soudage ou brasage.

3. Dispositif d'injection d'air de refroidissement selon la revendication 1, **caractérisé en ce que** ledit premier matériau métallique est choisi parmi les alliages à base Nickel.

4. Dispositif d'injection d'air de refroidissement selon la revendication 1, **caractérisé en ce que** ledit second matériau métallique est choisi parmi les alliages à base Nickel ou Titane.

5. Dispositif d'injection d'air de refroidissement selon l'une quelconque des revendications 1 à 4, **caractérisé en ce que** chaque injecteur est fixé aux viroles interne et externe par une liaison boulonnée (22) de façon à assurer un angle de calage précis.

## Patentansprüche

1. Vorrichtung (10) zum Einleiten von Kühlluft in einen Turbinenrotor einer Turbomaschine, umfassend eine Vielzahl von Injektoren (16, 18, 20), die um eine Längsachse der Turbomaschine gleichmäßig verteilt sind und zwischen einem Innenring (12) und einem Außenring (14) angebracht sind, wobei jeder Injektor mit aerodynamischem Profil zwischen einer Eintrittskante (24) und einer Austrittskante (26) eine rückseitige Wand (28) und eine vorderseitige Wand (30) umfasst, wobei die die Injektoren durchströmende Kühlluft in Richtung von Durchgangsöffnungen (42) des Turbinenrotors (40) durch einen einen aerodynamischen Hals bildenden Strömungsquerschnitt zwischen der Austrittskante eines Injektors und der rückseitigen Wand eines unmittelbar benachbarten Injektors ausgestoßen wird, **dadurch gekennzeichnet, dass** zur Änderung des Querschnitts an dem aerodynamischen Hals in Abhängigkeit von der Temperatur der die Injektoren durchströmenden Kühlluft jeder Injektor eine bimetallische Struktur umfasst, mit einem ersten metallischen Werkstoff (32), der einen größeren Teil der Struktur des Injektors bildet und einen ersten Wärmeausdehnungskoeffizienten aufweist, sowie einem zweiten metallischen Werkstoff (34), der einen ergänzenden Teil der Struktur im Bereich der sich an die Austrittskante des Injektors anschließenden rückseitigen Wand bildet und einen zweiten Wärmeausdehnungskoeffizienten, welcher geringer als der erste ist, aufweist, wobei jeder Injektor eine Höhenreduzierung über eine bestimmte Länge aufweist, die im Wesentlichen diesem ergänzenden Teil der Struktur entspricht, um eine freie Ausdehnung des aerodynamischen Halses sicherzustellen.

2. Vorrichtung zum Einleiten von Kühlluft nach Anspruch 1, **dadurch gekennzeichnet, dass** der erste und der zweite metallische Werkstoff durch Schweißen oder durch Löten zusammengefügt sind.

3. Vorrichtung zum Einleiten von Kühlluft nach Anspruch 1, **dadurch gekennzeichnet, dass** der erste metallische Werkstoff aus den Legierungen auf Nickelbasis ausgewählt ist.

4. Vorrichtung zum Einleiten von Kühlluft nach Anspruch 1, **dadurch gekennzeichnet, dass** der zweite metallische Werkstoff aus den Legierungen auf Nickel- oder Titanbasis ausgewählt ist.

5. Vorrichtung zum Einleiten von Kühlluft nach einem der Ansprüche 1 bis 4, **dadurch gekennzeichnet, dass** jeder Injektor an dem Innen- und dem Außenring mittels einer Bolzenverbindung (22) befestigt ist, um einen genauen Einstellwinkel sicherzustellen.

## Claims

1. A device (10) for injecting cooling air into a turbomachine turbine rotor comprising a plurality of injectors (16, 18, 20) distributed regularly around a longitudinal axis of the turbomachine and mounted between an inner shroud (12) and an outer shroud (14), each injector of aerodynamic profile comprising, between a leading edge (24) and a trailing edge (26), a suction side wall (28) and a pressure side wall (30), the cooling air passing through the injectors being ejected towards through orifices (42) in the turbine rotor (40) via a flow section forming an aerodynamic throat between the trailing edge of one injector and the suction side wall of an immediately adjacent injector, **characterized in that**, in order to modify the section of the aerodynamic throat as a function of the temperature of the cooling air passing through the injectors, each injector comprises a bimetallic structure with a first metal material (32) forming a major portion of the structure of the injector and having a first coefficient of thermal expansion, and a second metal material (34) forming a complementary portion of the structure in the vicinity of the suction side wall meeting the trailing edge of the injector, and having a second coefficient of thermal expansion that is smaller than the first, each injector presenting reduced height over a determined length substantially corresponding to said complementary portion so as to leave the aerodynamic throat free to expand.

2. A device for injecting cooling air according to claim 1, **characterized in that** said first and second metal materials are assembled together by welding or brazing.

3. A cooling air injection device according to claim 1, **characterized in that** said first metal material is selected from nickel-based alloys.

4. A cooling air injection device according to claim 1, **characterized in that** said second metal material is selected from nickel- or titanium-based alloys.

5. A cooling air injection device according to any one of claims 1 to 4, **characterized in that** each injector is fixed to the inner and outer shrouds by a bolted connection (22) so as to ensure a precise setting angle.
